# EUROPEAN PATENT APPLICATION

(11) **EP 2 719 672 A1**
(43) Date of publication of application: **16.04.2014**
(21) Application number: 12797574.6
(22) Date of filing: 06.06.2012
(51) Int. Cl.: C03C 27/06, H01L 31/04, H01M 14/00

(54) **COMPOSITE GLASS PLATE**

(30) Priority: 06.06.2011 JP 2011126726; 21.09.2011 JP 2011206310; 02.11.2011 JP 2011241704; 28.02.2012 JP 2012042358
(71) Applicant: International Frontier Technology Laboratory Inc., Tokyo 105-0001 (JP)
(72) Inventor: KOMATSU Nobuaki, Tokyo 105-0001 (JP); ITO Tomoko, Tokyo 105-0001 (JP); SHIRAI Katsuhiko, Tokyo 105-0001 (JP); NANJO Shin-ichiro, Tokyo 105-0001 (JP)
(74) Representative: Pfenning, Meinig & Partner GbR
(86) International application number: PCT/JP2012/064562
(87) International publication number: WO 2012/169530

(57) **Abstract**

In order to obtain a composite glass plate which shields infrared light and/or ultraviolet light, two glass substrates on which transparent conductive layers are formed respectively are disposed with the transparent conductive layers thereof facing each other. Infrared light is shielded and electric power is generated by using one glass substrate as a light incident side electrode, disposing a silicon dioxide particle layer thereon, and filling a colorless electrolyte between the two glass substrates. Further, ultraviolet light is also shielded by disposing a titanium dioxide layer on the other glass substrate. This composite glass plate is used as a window glass plate to shield only infrared light and/or ultraviolet light and transmit only visible light.

## Description

### Technical Field

The present invention relates to a composite glass plate.

### Background Art

A glass plate used in a window of a building or the like has an enough function if it transmits only visible light, but transmits unwanted or harmful light other than visible light.

In particular, an ultraviolet ray contained in the sunlight having a wavelength shorter than visible light may produce injury to the human body or may deteriorate indoor articles.

An infrared ray having a wavelength longer than visible light functions as a heat ray and excessively increases the indoor temperature.

For addressing the above, various kinds of functional glass has been subjected to practical use, for example, double glass containing two sheets of glass laminated and a gas filled therebetween for providing a thermal insulation function, laminated glass having a resin intervening between glass for enhancing the resistance capability, light shielding glass having a metal thin film formed on the surface for shielding an ultraviolet ray and an infrared ray, and shield glass having a metal film formed in the form of lattice for shielding an electromagnetic wave.

As a method for preventing unnecessary infrared light from being transmitted, infrared light is absorbed with a component contained in the glass plate itself or by coating an infrared light absorbing substance on the surface of the glass plate, or shown in JP-A-2002-345145.

Light shielding glass, in which a thin film having a thickness that is 1/4 of the wavelength of light to be shielded is provided on glass, and transmitted light is prevented through interference of the light reflected on the interfaces on the both sides of the thin film, is shown in " http://www.aist.go.jp/aist-i/press_release/pr20070625/pr20070625.html".

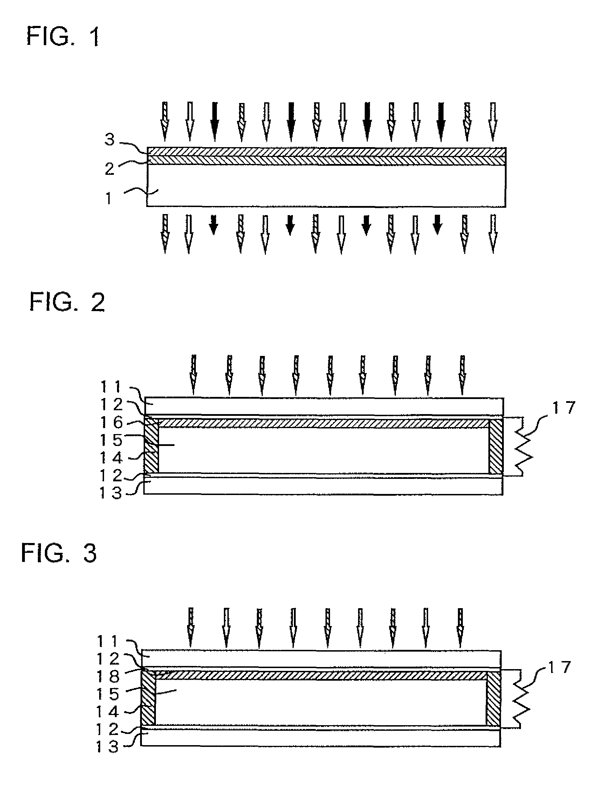

The infrared light shielding glass shown in Fig. 1 contains a glass plate 1 having coated on the surface thereof a silicon dioxide layer 2, which is a low refractive index material, and having further coated thereon a titanium dioxide layer 3, which is a high refractive index material, and thereby the incident infrared light and the reflected infrared light reflected on the surface of the glass plate are subjected to interference to provide visible light transmittance of 82% and infrared light reflectivity of 50%.

The coated layer of the infrared light shielding glass has the thickness of 1/4 of the wavelength of the light to be shielded, and thus the wavelength of the light to be suppressed from being transmitted is restricted by the thickness of the layer.

In the present specification, hereinafter, ultraviolet light is expressed by a hatched arrow, visible light is expressed by a white arrow, and infrared light is expressed by a black arrow.

Transmitted light that is largely attenuated is expressed by a shortened arrow, and transmitted light that is not attenuated or with a small attenuation is expressed by the original arrow.

There is an attempt to constitute solar cells by utilizing window glass, which occupies a large outer surface of a building, particularly, a tall building, but there is no solar cell that may be used as a composite glass plate, which requires to transmit visible light.

Examples of a relatively inexpensive solar cell include a solar cell using titanium dioxide (TiO₂) for utilizing the function known as the Honda-Fujishima effect.

Fig. 2 shows the basic structure of the titanium dioxide solar cell.

In Fig. 2, numerals 11 and 13 denote glass substrates each having formed on one surface thereof an FTO transparent conductive layer 12, and light enters on the side of the glass substrate 11. Numeral 16 denotes a porous titanium dioxide sintered material. Numeral 15 denotes an electrolytic solution, for which an iodine electrolyte containing iodine dissolved in a potassium iodide aqueous solution is generally used.

Numeral 14 denotes a sealant, and 17 denotes a load, such as a resistor.

Light that allows titanium dioxide to generate electric power is only ultraviolet light having the wavelength of 380 nm or less, and the ultraviolet light within the wavelength range is only 4% in the solar light. Accordingly, the use efficiency of the solar light, which is the most abundant light resources, is 4% at maximum and is practically 1% at most, and the use efficiency of the solar light is very low.

For addressing the defect of the titanium dioxide solar cell having a narrow usable wavelength range, a dye sensitized solar cell (DSSC) having a usable light range that is expanded to the visible light region having the longer wavelength than ultraviolet light by adsorbing a ruthenium complex dye to sintered porous titanium dioxide is known as a Gretzel cell.

The basic structure of the dye sensitized solar cell is described with reference to Fig. 3.

In Fig. 3, numerals 11 and 13 denote glass substrates each having formed on one surface thereof an FTO transparent conductive layer 12, and light enters on the side of the glass substrate 11. Numeral 18 denotes a porous titanium dioxide sintered material having a ruthenium complex dye adsorbed. Numeral 15 denotes an electrolytic solution, for which an iodine electrolyte containing iodine dissolved in a potassium iodide aqueous solution is generally used.

Numeral 14 denotes a sealant, and 17 denotes a load, such as a resistor.

The use efficiency of the solar light of the dye sensitized solar cell is theoretically 30% and is practically 10% at maximum.

While titanium dioxide has a photocatalyst function, the use of fused quartz particles treated with halogen acid as a material having the similar photocatalyst function is shown in JP-A-2004-290748 and JP-A-2004-290747.

Similarly, the use of synthetic quartz particles treated with halogen acid as a material having a photocatalyst function is shown in WO 2005/089941.

The synthetic quartz photocatalyst functions as a photocatalyst within the wavelength range of from 200 to 800 nm, which is further wider than that of the photocatalyst formed from fused quartz as a raw material shown in JP-A-2004-290748 and JP-A-2004-290747.

Furthermore, the present inventors have found that silicon dioxide represented by synthetic quartz may be used as a solar cell, and the solar cell is described in WO 2011/049156.

The silicon dioxide is colorless.

Silicon dioxide functions as a solar cell material by being treated with halogen acid even when it is not synthetic quartz, which is a crystalline material, but glass particles, which is an amorphous material, such as quartz glass, non-alkali glass, borosilicate glass and soda-lime glass.

An example of the structure of the silicon dioxide solar cell shown in WO 2011/049156 is described with reference to Fig. 4.

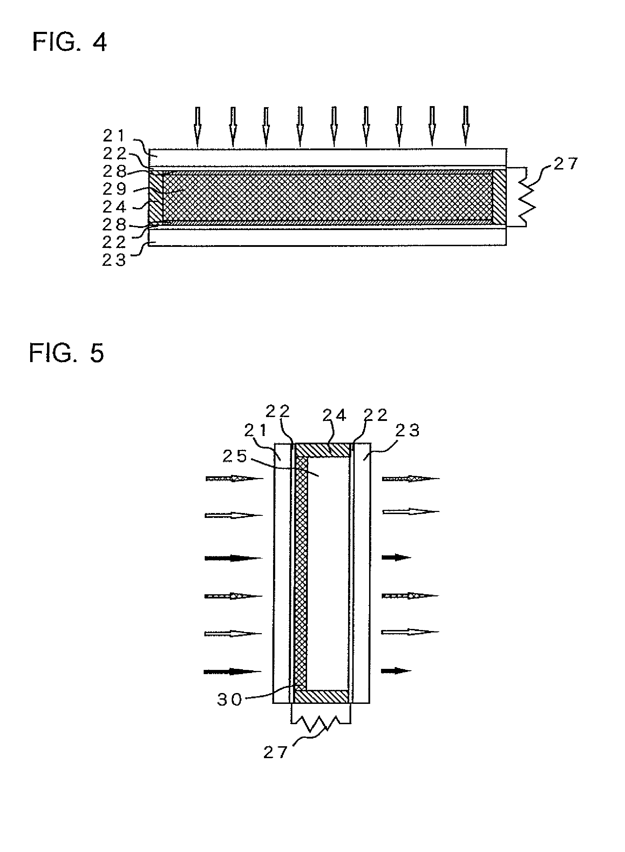

In Fig. 4, numerals 21 and 23 denote glass substrates each having formed on one surface thereof an FTO transparent conductive layer 22, and light enters on the side of the glass substrate 21. Numeral 29 denotes particles formed by pulverizing a silicon dioxide sintered material. An electrolytic solution coexists with the silicon dioxide particles 29, for which an iodine electrolyte containing iodine dissolved in a potassium iodide aqueous solution is generally used.

An n-type semiconductor layer, such as zinc oxide (ZnO) and titanium dioxide (TiO₂), is formed on the FTO layer 22 on the glass substrate 1 that is on the light incident side.

A platinum layer 28 is formed on the FTO layer 12 of the glass substrate 23 that is not on the light incident side.

Numeral 24 ,denotes a sealant, and 27 denotes a load, such as a resistor.

The organic electrolyte contains 0.1 mol of LiI, 0.05 mol of I₂, 0.5 mol of 4-tert-butylpyridine and 0.5 mol of tetrabutylammonium iodide dissolved in an acetonitrile solvent.

### Prior Art References

Document 1: JP-A-2002-345145
Document 2: JP-A-2004-290748
Document 3: JP-A-2004-290747
Document 4: WO 2005/089941
Document 5: WO 2011/049156

### Non Patent Literature

1: http://www.aist.go.jp/aist_i/press_release/pr20070625/pr20070625.html

### Disclosure of the Invention

### Object of The Invention

The invention relating to the application is to provide a window glass capable of reducing a transmission amount of infrared light and/or ultraviolet light incident on a building or the like.

It is also to provide a window glass capable of controlling a transmission amount of infrared light and/or ultraviolet light.

It is also to provide a window glass capable of generating electric power with incident light.

It is also to provide a composite glass plate with a colorless or light-colored solar cell.

### Means

The present inventors have found that a solar cell capable of being used as a window glass may be constituted by using a suitable electrolyte.

In the invention relating to the application, a solar cell formed of titanium dioxide and an iodine electrolyte is combined with synthetic quartz particles, which are a crystalline material, treated with halogen acid or glass particles, such as quartz glass, non-alkali glass, borosilicate glass and soda-lime glass, which are an amorphous material, treated with halogen acid, thereby constituting a solar cell, and the solar cell is used as a window glass plate.

Specifically, two glass plates each having a transparent conductive layer formed thereon are disposed to allow the transparent conductive layers to face each other, a titanium dioxide layer is disposed on one of the glass plates to make a light incident electrode, silicon dioxide particles are disposed on a platinum electrode on the other of the glass plates, and a colorless transparent electrolytic solution is filled between the two glass plates, thereby constituting a composite glass plate.

The invention relating to the application further includes the following features.
(1) A composite glass plate containing two glass substrates each having a transparent conductive layer formed thereon that are disposed to allow the transparent conductive layers to face each other, silicon dioxide particles that are disposed on one of the glass substrates, and an electrolyte that is filled between the two glass substrates, the transparent conductive layers being connected to an external load.
(2) A composite glass plate containing two glass substrates each having a transparent conductive layer formed thereon that are disposed to allow the transparent conductive layers to face each other, silicon dioxide particles that are disposed on one of the glass substrates, a titanium silicon dioxide particle layer that is disposed on the other of the glass substrates, and an electrolyte that is filled between the two glass substrates, the transparent conductive layers being connected to an external load.
(3) A composite glass plate for protecting a silicon solar cell, containing two glass substrates each having a transparent conductive layer formed thereon that are disposed to allow the transparent conductive layers to face each other, silicon dioxide particles that are disposed on one of the glass substrates, and an electrolyte that is filled between the two glass substrates, the transparent conductive layers being connected to an external load.
(4) A composite glass plate containing two glass substrates each having a transparent conductive layer formed thereon that are disposed to allow the transparent conductive layers to face each other, silicon dioxide particles that are disposed on one of the glass substrates, and an electrolyte that is filled between the two glass substrates, the transparent conductive layers being connected to an external load, the composite glass plate being housed in one container along with a silicon solar cell.

### Effects

The composite glass plate of the invention relating to the application having a solar cell structure using silicon dioxide generates electric power with incident infrared light and reduces the transmission amount of infrared light by from 80 to 85%.

By disposing in series with respect to incident light, a composite glass plate having a solar cell structure using titanium dioxide and a composite glass plate having a solar cell structure using silicon dioxide, ultraviolet light is shielded by the composite glass plate having a solar cell structure using titanium dioxide, and infrared light is shielded by the composite glass plate having a solar cell structure using silicon dioxide.

### Brief Description of Drawings

Fig. 1 shows a schematic illustration of an infrared light shielding glass of the related art.
Fig. 2 shows a schematic illustration of a conventional titanium dioxide solar cell.
Fig. 3 shows a schematic structural illustration of a conventional dye sensitized titanium dioxide solar cell.
Fig. 4 shows a schematic structural illustration of a conventional silicon dioxide solar cell.
Fig. 5 shows a schematic structural illustration of a silicon dioxide composite glass plate of Embodiment 1.
Fig. 6 shows a schematic structural illustration of a titanium dioxide composite glass plate of Embodiment 2.
Fig. 7 shows a schematic structural illustration of a dye sensitized titanium dioxide composite glass plate of Embodiment 3.
Fig. 8 shows a schematic structural illustration of a titanium dioxide-silicon dioxide tandem structure composite glass plate of Embodiment 4.
Fig. 9 shows a schematic structural illustration of a titanium dioxide-silicon dioxide composite glass plate of Embodiment 5.
Fig. 10 shows a schematic structural illustration of a combination of the composite glass plate of Embodiment 1 and a silicon solar cell.
Fig. 11 shows a silicon solar cell unit containing the composite glass plate of Embodiment 1 and a silicon solar cell that are combined and integrated.

### Description of Embodiments

The present inventors have found that as a result of further investigations on a silicon dioxide solar cell, it generates electric power even with light from an incandescent light bulb containing substantially no ultraviolet light.

The light radiated from an incandescent light bulb is the black-body radiation, and thus it contains only a slight amount of ultraviolet light, but the most part thereof is visible light and infrared light. According thereto, it has been comprehended that a silicon dioxide solar cell generates electric power with visible light and infrared light.

A silicon dioxide solar cell having the aforementioned structure is produced by using a glass plate of 100 mm × 100 mm, and irradiated with infrared light from a 500 W infrared ray bulb on the side of titanium dioxide, and the temperature on the irradiated surface and the temperature change at the rear position remote by 10 cm from the back of the silicon dioxide solar cell are compared.

As a result, a large difference is found between the temperature on the irradiated surface and the temperature at the rear position, and thus the infrared light shielding effect by the silicon dioxide solar cell is confirmed.

The infrared light shielding effect is reduced when the external load is detached, and thus it may be understood that the electric generation of the silicon dioxide solar cell contributes to the infrared light shielding effect of the glass plate.

The silicon dioxide solar cell generates electric power only in the case where a load is connected between the FTO transparent conductive layer 22 and the FTO transparent conductive layer 24, and does not generate electric power when no load is connected.

In other words, the silicon dioxide solar cell consumes incident infrared light for electric generation when a load is connected to generate electric power, but does not consume incident infrared light when a load is not connected and no electric power is generated.

From another point of view, incident infrared light is consumed and the transmission amount of infrared light is reduced when a load is connected to the silicon dioxide solar cell, but the transmission amount of incident infrared light is not reduced when no load is connected.

This means that the transmission amount of infrared light may be varied by whether or not a load is connected to the silicon dioxide solar cell or by varying the load.

By using the silicon dioxide solar cell as a cover of a silicon solar cell, transmission of harmful infrared light, which causes increase of temperature, may be prevented.

The silicon dioxide solar cell may use, as the counter electrode, a transparent conductive material as similar to the light incident side, rather than a non-transparent material, such as carbon or a metal sheet, and thus a light transmissive solar cell may be constituted.

By paying attention to these points, unnecessary infrared light is shielded to provide the composite glass plate preventing the electric power generation amount of a silicon solar cell from being reduced and the silicon solar cell unit of the invention.

The results of measurement of the light transmittance of the window glass plate having the solar cell structure and the two sheets FTO glass constituting both sides of the solar cell are shown in Table 1.

In Table 1, the numerals on the upper lines show the transmittance, and the numerals in parentheses on the lower lines show the shielding ratio.

**Table 1**

| | | | |
|---|---|---|---|
| | 289nm | 470nm | 800nm |
| FTO | 0% | 65% | 84.3% |
| | 100% | (35%) | (15.7%) |
| | | | |
| Solar cell | 0% | 0% | 15..3% |
| | (100%) | (100%) | (84.7%) |

As shown in the table, the solar cell shields substantially completely light in the wavelength range of 470 nm or less, and the FTO glass shields substantially completely light in the wavelength range of 289 nm or less but transmits 65% or more of light in the wavelength range of from 289 to 470 nm.

The solar cell shields 84.7% of light having the wavelength of 800 nm, but the shielding ratio of the FTO glass therefor is only 15.7%.

The heat ray shielding effects of the composite glass plate according to the invention of this application and an ordinary glass plate are measured.

The measurement is performed for the composite glass plates according to the invention of this application having a variation in thickness and an ordinary glass plate as comparison in such a manner that the composite glass plate is attached to one plane of a white box in a rectangular parallelepiped form for avoiding influence of heat to the interior, and the composite glass plate is irradiated with light including infrared light, followed by measuring the temperatures inside and outside the box. An external load is connected to the composite glass plate according to the invention, and the external load is varied.

A silicon dioxide solar cell having the aforementioned structure is produced by using a glass plate of 100 mm × 100 mm, and irradiated with infrared light from a 500 W infrared ray bulb on the side of titanium dioxide, and the temperature on the irradiated surface and the temperature change at the rear position remote by 10 cm from the back of the silicon dioxide solar cell are compared.

The results are shown in Table 2.

In Table 2, the composite glass plate B is thicker than the composite glass plate A. The composite glass plate C has a larger load than the composite glass plate B.

**Table 2**

| | Outside temperature | Inside temperature |
|---|---|---|
| General-purpose glass plate | 45.5 °C | 35.9 °C |
| Window glass plate A | 45.6 °C | 29.9 °C |
| Window glass plate B | 45.6 °C | 28.5 °C |
| Window glass plate C | 45.6 °C | 25.8 °C |

It is understood from the data shown in Table 2 that the temperature difference between the inside and outside of the box is less than 10°C in the case where the ordinary glass plate is used, but a large temperature difference of from 15 to 20 °C is exhibited in the case of the glass plates according to the invention of this application.

Among these, the composite glass plate C, which has only the difference of the larger load from the composite glass plate B, shows a large difference in temperature reaching 3 °C therefrom, and this clearly shows that the glass plate according to the invention shields an infrared ray through generation of electric power.

As shown above, a large difference is found between the temperature on the irradiated surface and the temperature at the rear position, and the infrared light shielding effect of the silicon dioxide solar cell is thus confirmed.

From the fact that the infrared light shielding effect is reduced when the external load is detached, it is understood that the electric generation of the silicon dioxide solar cell contributes to the infrared light shielding effect of the glass plate.

Based on this finding, this application constitutes a composite glass plate that transmits visible light and ultraviolet light, which contribute to electric generation of a silicon solar cell but shields infrared light, which does not contribute to electric generation but causes reduction of the electromotive force of the silicon solar cell, and a silicon solar cell unit containing the composite glass plate avoiding temperature rise causing reduction of the electromotive force.

### Embodiment 1

The composite glass plate of Embodiment 1 is described with reference to Fig. 5.

The composite glass plate of Embodiment 1 is a composite glass plate that is obtained by constituting the conventional silicon dioxide solar cell shown in Fig. 4 based on the structure of titanium dioxide shown in Fig. 2.

In Fig. 5, numeral 21 denotes a glass substrate formed of a general-purpose glass plate, having formed on one surface thereof a transparent conductive layer 22, such as FTO, to provide a light incident side. Numeral 23 denotes a glass substrate formed of a general-purpose glass plate, as similar to 21, having formed on one surface thereof a transparent conductive layer 22, such as FTO, to provide a light outgoing side. The glass substrates 21 and 23 are disposed to allow the transparent conductive layers 22 thereof to face each other.

A silicon dioxide particle sintered material is disposed on the transparent conductive layer 22 of the glass substrate 21 on the light incident side.

The silicon dioxide particles are synthetic quartz particles formed by pulverizing crystalline synthetic quartz particles or amorphous glass particles to a particle diameter of 0.2 mm or less, and desirably 500 nm or less, having been treated with halogen acid, and the silicon dioxide particle sintered material is formed by mixing with ethanol and coating and drying on the transparent conductive layer 22 having a layer of platinum or the like formed thereon.

As the silicon dioxide particles, a rock crystal which is a crystalline material of silicon dioxide or glass particles such as quartz glass, non-alkali glass, borosilicate glass and soda-lime glass which are amorphous materials of silicon dioxide may be used, and coarsely pulverized silicon dioxide particles are immersed in a hydrofluoric acid aqueous solution, and then the rock crystal particles or glass particles are rinsed with water and then dried, followed by pulverizing finely. In addition to hydrofluoric acid, hydrochloric acid or hydrobromic acid may be used as the halogen acid, and hydrofluoric acid is preferred.

The diameter of the silicon dioxide particles is not limited to fine particles of 500 nm or less, and those having the diameter of approximately 0.2 mm may also be used.

As the electrode on the light incident side, CuO, MgO, ZnO, SrTiO₃, carbon nitride, graphene and the like may be used in addition to titanium dioxide.

A transparent electrolyte 25 is filled between the two glass substrates 21 and 23. Numeral 24 denotes a sealant, and 27 denotes an external load.

The electrolyte 25 used may be most simply an iodine electrolyte containing iodine dissolved in a potassium iodide aqueous solution, but the electrolyte is colored although it is transparent, and thus is not suitable for the use as a window glass.

Currently, the electrolyte having the following composition is useful as a colorless electrolyte.
1-Ethyl-3-methylimidazolium iodide: 0.4 M,
tetrabutylammonium iodide: 0.4 M,
4-t-butylpyridine: 0.2 M and
guanidinium isothiocyanate: 0.1 M
are prepared as a propylene carbonate solution.

The electrolytic solution is substantially colorless and transparent to the visible light region in the case where the concentration of halogen molecules, such as I ₂ and Br ₂, is 0.0004 mol/L or less.

In addition, the following electrolyte may be used.

0.5 mol of lithium iodide (LiI) and 0.05 mol of metallic iodine (I₂) are prepared as a solution with polyethylene glycol having a molecular weight of 220 as a solvent.

The following electrolyte may also be used.

0.5 mol of lithium iodide (LiI) and 0.05 mol of metallic iodine (I₂) are dissolved in methoxypropionitrile, to which a thickening agent is added, and 4-tert-butylpyridine is further added for enhancing the open electromotive force and the fill factor.

Examples of an electrolyte that provides the maximum value include the following.

LiI and I₂, 3-methoxypropionitrile as a solvent, 1-propyl-2,3-dimethylimidazolium iodide as an ambient temperature molten salt for reducing the viscosity and facilitating diffusion of ions, and 4-tert-butylpyridine for preventing the reverse current and enhancing the open electromotive force are mixed at prescribed ratios.

In the case where there is no demand of colorless transparency, a colored electrolytic solution, such as an iodine electrolytic solution with a reduced concentration, may be used.

Examples of the colorless electrolyte used include acetic acid and citric acid.

### Embodiment 2

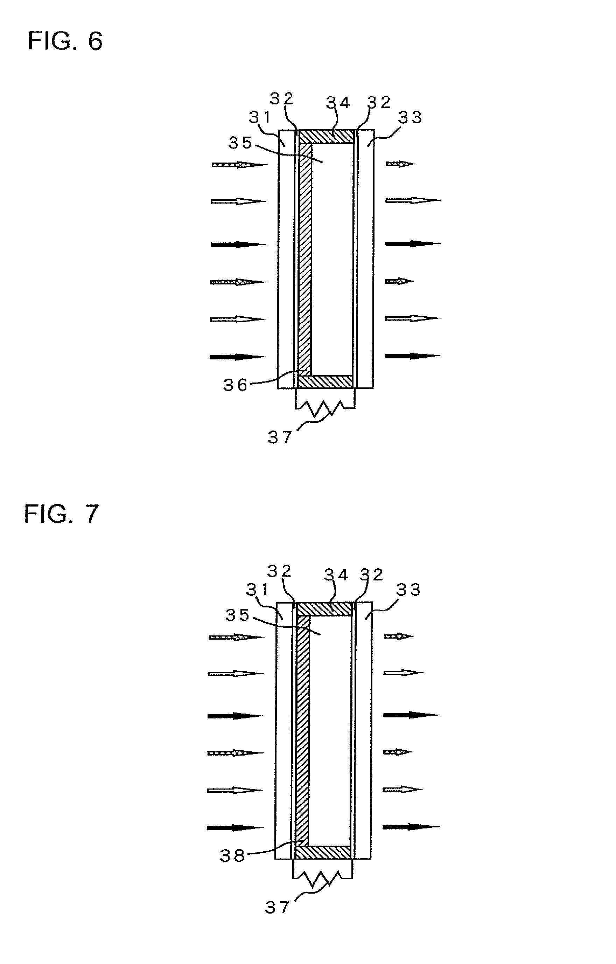

The composite glass plate of Embodiment 2 is described with reference to Fig. 6.

The composite glass plate of Embodiment 2 is obtained by converting the structure of the ordinary titanium dioxide solar cell shown in Fig. 2 to a composite glass plate.

In Fig. 6, numeral 31 denotes a glass substrate formed of a general-purpose glass plate, having formed on one surface thereof a transparent conductive layer 32, such as FTO, to provide a light incident side.

Numeral 33 denotes a glass substrate formed of a general-purpose glass plate, as similar to 31, having formed on one surface thereof a transparent conductive layer 32, such as FTO, to provide a light outgoing side.

The glass substrates 31 and 33 are disposed to allow the transparent conductive layers 32 thereof to face each other.

A titanium dioxide layer is disposed on the transparent conductive layer 32 of the glass substrate 31 on the light incident side, a transparent electrolyte 35 is filled between the two glass substrates, and power is output from the two transparent conductive layers.

The titanium dioxide layer 36 may be a titanium dioxide layer that is formed by such a measure as sputtering, chemical vapor deposition (CVD), physical vapor deposition (PVD), a sol-gel method, a plating method, an electrolytic polymerization method and a molecular precursor method in some cases, or may be a titanium dioxide porous sintered material that is solidified by such a measure as sintering in other cases.

In the case using the molecular precursor method, titanium dioxide particles are preferably added separately for enhancing the capability.

The electrolyte 35 used may be most simply an iodine electrolyte containing iodine dissolved in a potassium iodide aqueous solution, but the electrolyte is colored although it is transparent, and thus is not suitable for the use as a window glass.

Currently, the electrolyte having the following composition is useful as a colorless electrolyte.

1-Ethyl-3-methylimidazolium iodide: 0.4 M,

tetrabutylammonium iodide: 0.4 M,

4-t-butylpyridine: 0.2 M and

guanidinium isothiocyanate: 0.1 M
are prepared as a propylene carbonate solution.

The electrolytic solution is substantially colorless and transparent to the visible light region in the case where the concentration of halogen molecules, such as I₂ and Br₂, is 0.0004 mol/L or less.

Furthermore, acetic acid, citric acid and the like, which are colorless and transparent, may be used as the colorless transparent electrolyte.

The composite glass plate of Embodiment 2 shields substantially completely light in the wavelength range of 470 nm or less.

### Embodiment 3

The composite glass plate of Embodiment 3 is described with reference to Fig. 7.

The composite glass plate of Embodiment 2 is obtained by converting the structure of the ordinary dye sensitized titanium dioxide solar cell shown in Fig. 3 to a composite glass plate.

The difference between the composite glass plate of Embodiment 3 and the composite glass plate of Embodiment 2 is only that the titanium dioxide layer of the composite glass plate of Embodiment 2 is a titanium dioxide layer or a titanium dioxide porous sintered material, whereas that of the composite glass plate of Embodiment 3 is sintered porous titanium dioxide having a dye, such as a ruthenium complex dye, adsorbed thereon, and a further description is omitted since there is no further difference.

In the case where the transmitted light may be colored, such as ornamental use, a composite glass plate having a dye sensitized solar cell structure capable of generating electric power with visible light may be useful.

The composite glass plate of Embodiment 3 generates electric power with light not only in the ultraviolet region but also the visible light region, and shields light not only in the ultraviolet region but also the visible light region, by the use of the sensitizing dye.

### Embodiment 4

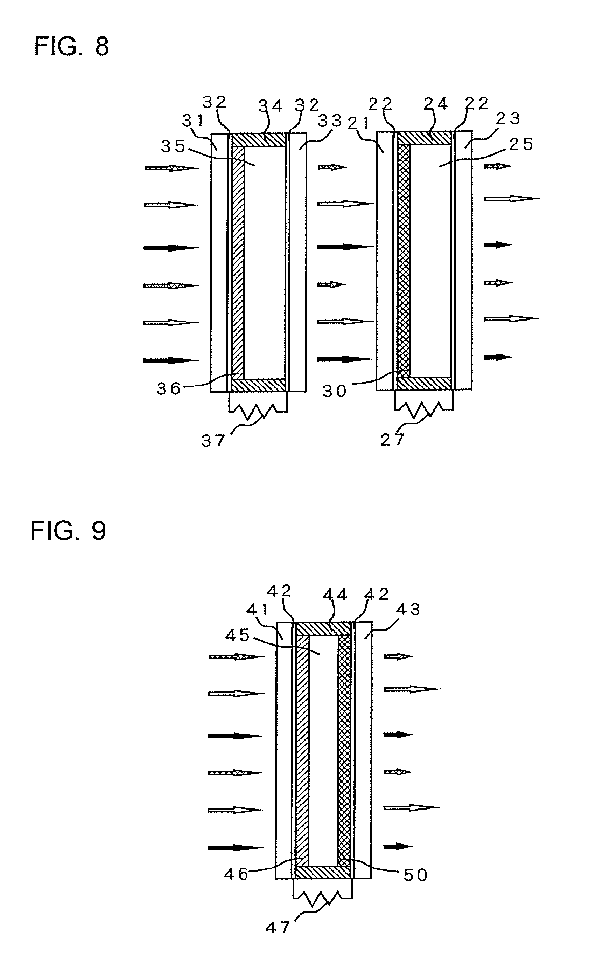

The composite glass plate of Embodiment 4 is described with reference to Fig. 8.

The composite glass plate of Embodiment 4 contains the composite glass plate using silicon dioxide of Embodiment 1 and the composite glass plate using titanium dioxide of Embodiment 2, which are disposed in series, and repeated descriptions thereof are omitted.

Ultraviolet light, which allows the composite glass plate using titanium dioxide to generate electric power, is hard to pass through the composite glass plate as compared to visible light and infrared light, which are shielded by silicon dioxide for electric generation, and therefore, the composite glass plate using titanium dioxide is disposed preferably on the side where light enters.

### Embodiment 5

The composite glass plate of Embodiment 5 is described with reference to Fig. 9.

The composite glass plate of Embodiment 4 contains the composite glass plate using titanium dioxide of Embodiment 2 and the composite glass plate using silicon dioxide of Embodiment 1, which are integrated with the electrolyte as the common constitutional element. Ultraviolet light, which allows titanium dioxide to generate electric power, is hard to pass through the composite glass plate as compared to visible light and infrared light, which are shielded by silicon dioxide for electric generation, and therefore, the titanium dioxide layer is disposed on the glass substrate on the side where light enters.

In Fig. 9, numeral 41 denotes a glass substrate formed of a general-purpose glass plate, having formed on one surface thereof a transparent conductive layer 42, such as FTO, to provide a light incident side. Numeral 43 denotes a glass substrate formed of a general-purpose glass plate, as similar to 41, having formed on one surface thereof a transparent conductive layer 42, such as FTO, to provide a light outgoing side. The glass substrates 41 and 43 are disposed to allow the transparent conductive layers 42 thereof to face each other.

A titanium dioxide layer 46 is disposed on the transparent conductive layer 42 of the glass substrate 41 on the light incident side, and a silicon dioxide particle sintered material 50 is disposed on the transparent conductive layer 42 on the glass substrate 43 on the light incident side.

A colorless electrolyte 45 is filled between the two glass substrates 41 and 43.

Numeral 44 denotes a sealant, and 47 denotes an external load, which is connected to the transparent conductive layers 42 and 42.

The titanium dioxide layer 46 may be a titanium dioxide layer that is formed by such a measure as sputtering, chemical vapor deposition (CVD), physical vapor deposition (PVD), a sol-gel method, a plating method, an electrolytic polymerization method and a molecular precursor method in some cases, or may be a titanium dioxide porous sintered material that is solidified by such a measure as sintering in, other cases.

In the case using the molecular precursor method, titanium dioxide particles are preferably added separately for enhancing the capability.

As the electrode on the light incident side, CuO, MgO, ZnO, SrTiO₃, carbon nitride, graphene and the like may be used in addition to titanium dioxide.

The particles of the silicon dioxide sintered material 50 are synthetic quartz particles pulverized to a particle diameter of 0.2 mm or less, and desirably 500 nm or less, and the silicon dioxide particle sintered material is formed by mixing with ethanol and coating and drying on the transparent conductive layer 42 having a layer of platinum or the like formed thereon.

As the silicon dioxide particles, the synthetic quartz which is a crystalline material of silicon dioxide or glass particles such as quartz glass, non-alkali glass, borosilicate glass and soda-lime glass which are amorphous materials of silicone dioxide may be used, and coarsely pulverized silicon dioxide particles are immersed in a hydrofluoric acid aqueous solution, and then the synthetic quartz particles or glass particles are rinsed with water and then dried, followed by pulverizing finely. In addition to hydrofluoric acid, hydrochloric acid or hydrobromic acid may be used as the halogen acid, and hydrofluoric acid is preferred.

The synthetic quartz particles or the other glass particles may be treated with halogen acid other than hydrofluoric acid, such as hydrochloric acid or hydrobromic acid.

The electrolyte 25 used may be most simply an iodine electrolyte containing iodine dissolved in a potassium iodide aqueous solution, but the electrolyte is colored although it is transparent, and thus is not suitable for the use as a composite glass plate. Other electrolyte may be used.

Currently, the electrolyte having the following composition is useful as a colorless electrolyte, as similar to the composite glass plate of Embodiment 1.

1-Ethyl-3-methylimidazolium iodide: 0.4 M,

tetrabutylammonium iodide: 0.4 M,

4-t-butylpyridine: 0.2 M and

guanidinium isothiocyanate: 0.1 M
are prepared as a propylene carbonate solution.

The electrolytic solution is substantially colorless and transparent to the visible light region in the case where the concentration of halogen molecules, such as I₂ and Br₂, is 0.0004 mol/L or less.

Furthermore, acetic acid, citric acid and the like, which are colorless and transparent, may be used as the colorless transparent electrolyte.

The FTO glass shields substantially completely light in the wavelength range of 289 nm or less but transmits 65% or more of light in the wavelength range of from 289 to 470 nm. On the other hand, the composite glass plate of Embodiment 4 shields substantially completely light in the wavelength range of 470 nm or less. The FTO glass transmits 84.3% of light having the wavelength of 800 nm, i.e., shields 15.7% of the light, whereas the composite glass plate of Embodiment 4 shields 84.7% of the light.

The composite glass plate of Embodiment 3 was measured for characteristics as a solar cell by irradiating the composite glass plate having an area of 1 cm × 1 cm with light of 1 kw/m², which was the solar constant, with a solar simulator, and short-circuit current of 348 µ A and open circuit voltage of 620 mV were obtained.

When the area of the composite glass plate was changed to 2 cm × 2 cm, a short-circuit current of 1.7990 mA and open circuit voltage of 570 mV were obtained, and thus a composite glass plate with a larger area exhibited a larger photo-generation efficiency, which was contrary to an ordinary solar cell.

In the case of the synthetic quartz particles having a particle diameter of 0.2 mm or less, a short-circuit current of 20 µ A and an open circuit voltage of 417 mV were obtained with an area of 1 cm × 1 cm.

In the composite glass plate of Embodiment 5, as the titanium dioxide layer 46, the electrolyte 45 and the silicon dioxide layer 50 are all colorless and transparent, it may be used as a transparent composite glass plate and simultaneously functions as a solar cell.

The composite glass plate shields from 80 to 85% of infrared light having the wavelength of 800 nm or over and simultaneously generates electric power.

The composite glass plate of Embodiment 3 was measured for characteristics as a solar cell by irradiating the composite glass plate having an area of 1 cm × 1 cm with light of 1 kw/m², which was the solar constant, with a solar simulator, and a short-circuit current of 341.7 µ A and an open circuit voltage of 500 mV were obtained.

When the area of the composite glass plate was changed to 2 cm × 2 cm, a short-circuit current of 1799 mA and an open circuit voltage of 570 mV were obtained, and thus a composite glass plate with a larger area exhibited a larger photo-generation efficiency, which was contrary to an ordinary solar cell.

In the case of the synthetic quartz particles having a particle diameter of 0.2 mm or less, a short-circuit current of 85 µ A and an open circuit voltage of 470 mV were obtained with an area of 1 cm × 1 cm.

There was no significant difference found between the case where the side of the silicon dioxide was irradiated and the case where the side of the titanium dioxide was irradiated.

While titanium dioxide is used on the light incident side in the Embodiment, other suitable materials, such as zinc oxide, may be selected.

As titanium dioxide, a particle shape may be used in addition to the layer.

In the case where titanium dioxide in the form of a layer is used as an electrode on the light incident side, a transparent glass plate is obtained, and in the case where titanium dioxide in the form of a porous sintered material is used, a frosted glass plate is obtained.

### Embodiment 6

A solar cell using silicon includes a crystalline type and a thin layer type, and the crystalline type has the highest generation efficiency, but the crystalline type has a large temperature coefficient of electric generation efficiency, i.e., the electric generation efficiency is largely reduced when the temperature is increased.

The temperature rise is caused by the infrared component in the solar light, and thus for avoiding the temperature rise, it is important to prevent infrared light from entering to the solar cell.

For that purpose, the composite glass plate having a silicon dioxide solar cell structure having an infrared light shielding function described in Embodiment 1 is useful, and thus is described as an embodiment below.

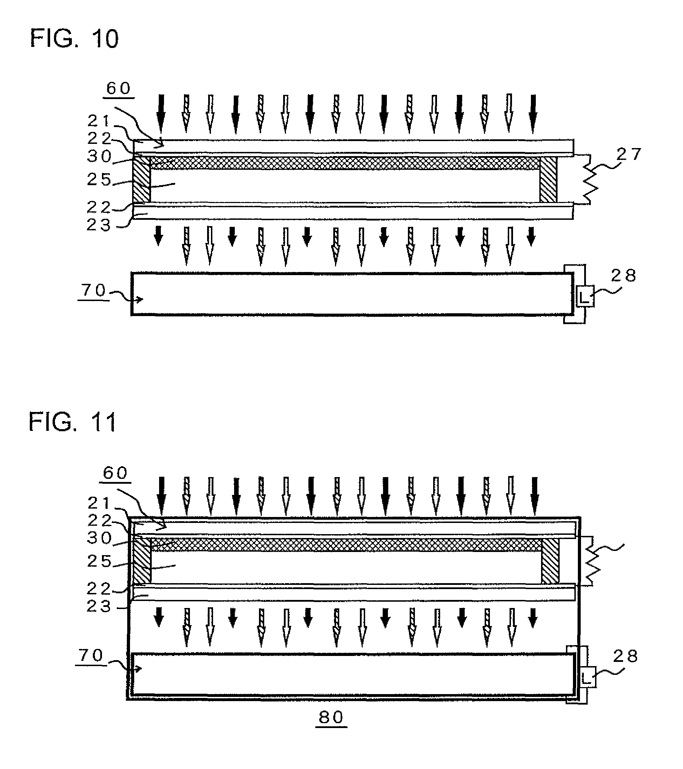

A composite glass plate 60 having a silicon dioxide solar cell structure shown in Fig. 10 has the same structure as in Embodiment 1, and the description thereof is omitted.

The conventional silicon dioxide solar cell shown in Fig. 4 may also be used.

Numeral 70 denotes a silicon solar cell, to which a load 28 for supplying electric power to the outside is connected.

The composite glass plate 60 having a silicon dioxide solar cell structure is connected to a load 27.

When the natural light containing infrared light enters, the composite glass plate 60 functions as a silicon dioxide solar cell and generates electric power. The infrared light that is incident on the composite glass plate 10 along with ultraviolet light and visible light in the natural light is attenuated through contribution to electric generation and emitted, whereas ultraviolet light and visible light are outgoing as they are and are incident on the silicon solar cell 70 to generate electric power.

Accordingly, the composite glass plate 60 having a silicon dioxide solar cell structure functions as an infrared light shielding composite glass plate when connected to a load.

The electric power generated by the composite glass plate 60, which is a silicon dioxide solar cell, is supplied to the outside along with electric power generated by the silicon solar cell.

### Embodiment 7

The composite glass plate 60 and the silicon solar cell 70 described in Embodiment 6 may be formed into a silicon solar cell unit housed in one container as shown in Fig. 11.

### Industrial Applicability

The composite glass plate according to the invention of this application, which contains silicon dioxide, which is inexpensive and is free of resource problem, and a colorless and transparent electrolyte sealed between two glass plates, not only shields infrared light and thus is useful as an exterior sheet glass for a building, an interior sheet glass for a building, a sheet glass for a vehicle, a sheet glass for agriculture, a sheet glass for furniture, a sheet glass for an electric equipment and a sheet glass for a showcase, and particularly in the field where a double glass plate, such as a double glazed glass plate, for achieving thermal insulation, but also generates electric power as a solar cell and thus is useful for solving the energy problem from both the aspects.

### Reference Numerals

1, 11, 13, 21, 23, 31, 33, 41, 43 glass substrate
12, 22, 32, 42 transparent conductive layer
2, 21, 30, 50 silicon dioxide particle layer
3, 16, 36, 46 titanium dioxide particle layer
18 sensitizing dye-added titanium dioxide particle layer
15, 25, 35, 45 electrolytic solution
14, 24, 34, 44 sealant
17, 27, 37, 28 load

## Claims

1. A composite glass plate comprising two glass substrates each having a transparent conductive layer formed thereon that are disposed to allow the transparent conductive layers to face each other;
silicon dioxide particles that are disposed on one of the glass substrates;
an electrolyte that is filled between the two glass substrates; and
said transparent conductive layers being connected to an external load.

2. The composite glass plate according to claim 1, wherein a titanium silicon dioxide particle layer is disposed on the other of the glass substrates.

3. A composite glass plate for protecting a silicon solar cell, comprising two glass substrates each having a transparent conductive layer formed thereon that are disposed to allow the transparent conductive layers to face each other;
silicon dioxide particles that are disposed on one of the glass substrates;
an electrolyte that is filled between the two glass substrates; and
said transparent conductive layers being connected to an external load.

4. A composite glass plate comprising two glass substrates each having a transparent conductive layer formed thereon that are disposed to allow the transparent conductive layers to face each other;
silicon dioxide particles that are disposed on one of the glass substrates;
an electrolyte that is filled between the two glass substrates;
said transparent conductive layers being connected to an external load; and
the composite glass plate being housed in one container along with a silicon solar cell.
